# EUROPEAN PATENT SPECIFICATION

(11) **EP 0 933 628 B1**
(45) Date of publication and mention of the grant of the patent: **05.04.2006**
(21) Application number: 99200249.3
(22) Date of filing: 01.02.1999
(51) Int. Cl.: G01N 15/08, G01M 3/04

(54) **Method for testing the tightness of a floor**
Verfahren zur Prüfung der Dichtheit eines Bodens
Procédé pour tester l'étanchéité d'un plancher

(30) Priority: 03.02.1998 NL 1008187
(43) Date of publication of application: 04.08.1999
(73) Proprietor: De Zeven Son B.V., 5691 RH Son en Breugel (NL)
(72) Inventor: Belgers, Johannes Antonius Wouter, 5691 RH Son en Breugel (NL)
(74) Representative: Verhees, Godefridus Josephus Maria

(56) References cited:
- EP-A- 0 147 917
- CH-A- 517 302
- DE-C- 3 331 486
- FR-A- 2 696 828
- US-A- 4 979 390
- PATENT ABSTRACTS OF JAPAN vol. 010, no. 190 (P-474), 4 July 1986 & JP 61 035327 A (MITSUBISHI HEAVY IND LTD), 19 February 1986
- PATENT ABSTRACTS OF JAPAN vol. 098, no. 005, 30 April 1998 & JP 10 019715 A (KYODO SANSO KK;MEIJI CONSULTANT KK), 23 January 1998

## Description

### BACKGROUND OF THE INVENTION:

### Field of the invention

The present invention relates in an overall sense to a working method for measuring the degree of impermeability (or, conversely: the degree of permeability) of a floor. More particulary the present invention relates to a working method for testing the impermeability respectively permeability of a floor, of a hard material, such as for example asphalt, stone or concrete or the like, which floor rests on a ground of for example sand or a sand/cement mixture or the like, in which one pumps air from above through the floor or from a side of the floor between the floor and the ground, to a space directly under the relevant floor and mainly above the ground under the floor, and one determines, for example by observing soap bubbles forming on the top of the floor, whether or not air is penetrating through the floor. The present invention relates in particular, but not solely, to testing whether a floor of a petrol station, including the passageways and/or connections that may be built into it, demonstrates leakage, and it shall therefore hereinafter be explained in the context of this example of application. It must, however, be emphasised that the invention can also be applied in other areas, such as for example industrial floors (such as for example the petrochemical and agricultural industries, workshops and the like).

For the protection of the environment in recent years increasing numbers of legal guidelines have been established to which floor constructions must adhere, in order to prevent harmful and/or toxic substances from penetrating floors and entering the ground and/or the ground water. Such guidelines, based on national or international regulations, may apply for example to floor constructions in garage businesses, industrial buildings and storage rooms in agriculture and horticulture, industrial buildings and storage rooms in the industrial world, etc. An example of such a situation is the floor of a petrol station: in view of the fact that the chance always exists that fuel (petrol) may be spilled while a tank is being filled, the floor of a petrol station must be liquid-tight, that is to say not permeable to liquids, in order to prevent the spilled fuel from penetrating through the floor and ending up in the ground under the floor. Of course inspections will have to be carried out regularly to determine whether or not the floor continues to be liquid-tight, and any leaks that may be observed will have to be sealed. Such regular inspections are indeed prescribed by law (currently: at least once a year). In addition, it will have to be determined with some regularity whether or not the ground under the floor has been contaminated by the penetration of harmful substances.

### Prior art

A working method known in practice for testing the liquid tightness of the floor, that is to say measuring the degree to which the floor is "permeable" for liquids, is based on the measurement of permeability for gas. Briefly summarised the pressure of the air under the floor is increased, and an inspection is carried out above the floor as to whether or not air is escaping through the floor; generally this is done by coating the top of the floor with a soap solution; wherever air is leaking through the floor soap bubbles will occur.

The working method described in the preamble of claim 1 is known from Dutch patent 1005931, falling under the provisions of Article 54(3) EPC. An important disadvantage of this known method is that one cannot place such a filter at any random position in the floor, because one must bear in mind the possible presence of lines in the ground, such as for example liquid lines and electrical cables. It is clear that the consequences of the destruction of a fuel pipeline or a gas pipeline or an electrical cable can prove disastrous. The installation of a vertical system for carrying out the known method comprises much preparatory work, which is time-consuming, labour-intensive, and rather expensive; first drawings of the lines that have been placed must be requested, then on the basis of the drawings and possible inspection measurements one must ascertain precisely where those lines and cables are located. The filters that are used can become soiled and/or become clogged; so maintenance work will have to be carried out, and it is even possible that filters may have to be replaced.

In addition, the known method has the disadvantage that they it must cause a relocation of air through the ground itself. Because of this air relocation any possible contamination of the ground may spread. This may result in an increase in the volume of contaminated ground, so that the costs of the possible sanitation of the ground may increase.

In addition, for the known method a drill hole in the ground must be of a greater diameter than that of the filter to be placed, and the drill hole is filled with gravel after the filter is placed. The vertical drill hole with the filter placed in it and the gravel filling then form a vertical leakage channel. If the floor has a leak and contamination gets into the ground, the contamination by the leak channel can rather easily penetrate more deeply into the ground and for example reach the ground water. In other words: the vertical system disrupts the integrity of the ground, in particular the resistance that the ground offers to the vertical migration of contamination. This problem is all the greater the more the measurement points are placed at locations with elevated leakage-contamination risk.

When drilling in the ground the top edge of the hole will crumble, leaving a hollow space under the floor that can never be completely filled up. In addition, the hole must be larger than the diameter of the filter, so that the space between the filter and the wall of the hole will be filled with ground. However, this filled-in ground has a lower density than the surrounding ground and will become more compact at a later point. Due to the specified hollow space and the compacting the floor will eventually sink, with all the subsequent negative effects.

### Summary of the invention

The present invention envisages the alleviation of the specified disadvantages, or in any case their minimisation.

An important objective of the present invention is to establish a working method for testing the impermeability of a floor that can be utilised with equipment for which the costs per location are decreased.

Another important objective of the present invention is to establish a working method and system with which the impermeability of an already existing floor can be determined in a relatively simple manner.

To this end the working method according to the invention, which is defined in claim 1, is characterized in that the air is pumped directly to a space directly under the relevant floor.

The invention is based on the observation that it is advantageous to not blow the air into the ground but instead blow it directly under the floor or into any possible joints of the floor. This makes it possible to carry out the assessment with relatively simple equipment that is quite easy to install.

According to an important aspect of the present invention, a passageway is made in the floor to be inspected, and via the passageway air is blown directly under the floor. The air will spread out in the border area between the ground and the floor, and into the possible joints, whereby the air will encounter relatively little resistance. Thus it is not necessary to install a network of lines and filters in the ground.

With the known method the air pressure under the floor is not the same everywhere and in fact it is hardly, or not at all, known as a consequence of the resistance of the ground to the permeability of the air. With the method according to the invention a controlled pressure under the floor is indeed placed that is, in addition, the same everywhere.

The measurement surface in the working method according to the invention is greater due to a better spread of the air under the floor. For this reason less measurement points with filters are required, which saves money and involves less risk with regard to critical floor components.

In addition, with the known method where there is contamination of the filter, the filter must be replaced immediately, since otherwise the measurements would be influenced. This is time-consuming and expensive. In the working method according to the invention where there is contamination only the test nipple need be rinsed clean, something which can be done quickly.

It is noted that from DE-C-33 31 486 a working method is known in which air is blown directly under a top layer. However this top layer is not a floor of a hard material but a soft roof cover.

### Brief description of the drawings

These and other aspects, characteristics and advantages of the present invention will be further clarified by the below description of a preferred embodiment of a measurement system for carrying out the method according to the invention with reference to the drawing in which similar reference numerals refer to similar or comparable components, and in which:
Figures 1 diagrammatically illustrates a known measurement equipment according to the vertical system;
Figure 2 diagrammatically illustrates the principle of the present invention; and
Figure 3 diagrammatically illustrates a simple embodiment of the present invention.

### Detailed description of the drawings

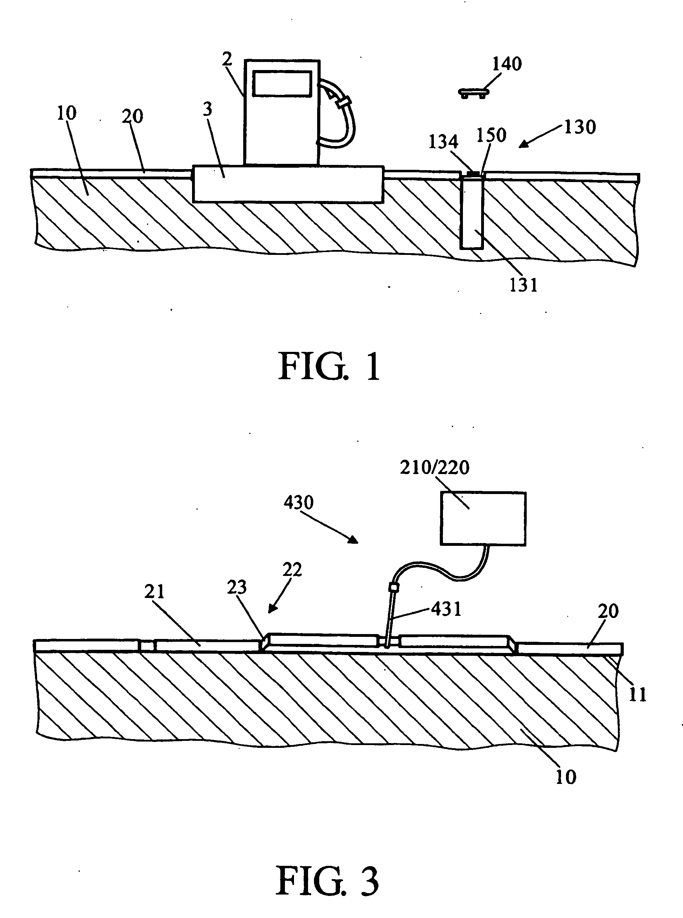

Figures 1 diagrammatically illustrate a known vertical inspection system 130 for carrying out the known method. This inspection system 130 comprises an oblong tube filter that is generally indicated with the reference numeral 131, the longitudinal axis of which is directed vertically. More particularly the known tube filter 131 comprises a spherical tube that is sealed off at its top end by a sealing plate. In the sealing plate there is a connection coupling 134 for the connection of an air hose (not shown). Normally the connection coupling 134 is closed. If on the connection coupling 134 an air hose is connected, the air hose communicates with the inside of tube.Through a compressor (also not shown) via the air hose and the connection coupling 134 the air pressure in the inside of the tube is increased. The length of the tube is approximately 1 m.

The filter 131 is installed by first drilling a hole in the floor 20, which hole is continued in a drill hole in the ground 10.

Then between the top end of the tube and the wall of the hole a ring, shaped sealing collar 150 is placed.

When the inspection system 130 is not being used for taking measurements, the hole is covered with a liquid-tight sealing lid 140.

Should it be desirable to investigate the impermeability of the floor 20, one removes the lid 140 and connects a hose from an air pump to the connection 134. Then, one introduces compressed air into the tube, which air will penetrate into the ground 10.

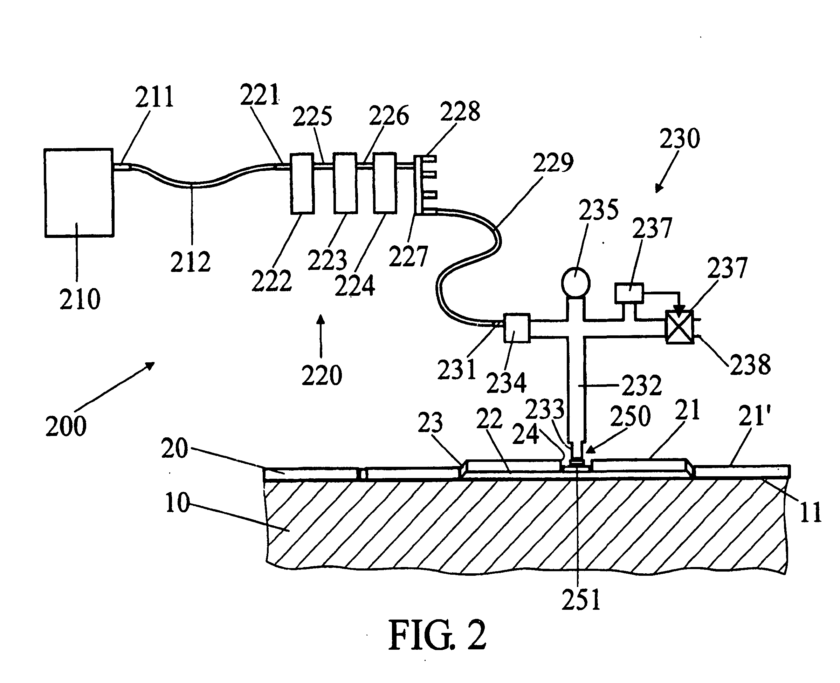

Figure 2 diagrammatically illustrates the principle of a preferred embodiment of a mobile air testing system 200 for carrying out the method according to the invention according to the present invention. The mobile air testing system 200 comprises a suitable air source 210 with a sufficient capacity such as for example a compressor or blower, with an exit connection 211. The exit connection 211 of the compressor 210 is connected via a flexible hose 212 with a sufficient diameter to an entrance connection 221 of a filter unit 220. The filter unit 220 comprises a number of serially coupled filters 222, 223, 224, of which three are shown in figure 3. The filters 222, 223, 224 are designed for removing undesirable components such as water, grease and oil from the compressed air produced by the compressor 210. Preferably, and as illustrated, the successive filters 222, 223, 224 are permanently attached to each other, for example by means of metal couplings 225, 226 of sufficient diameter, to form a rigid unit with a minimal flow resistance. At the exit of the last filter 224, preferably, and as illustrated, a distribution piece 227 with several exit connections 228 is installed, in the demonstrated example four.

An exit connection 228 of the filter unit 220 is connected by means of a flexible hose 229 with a sufficient diameter to an entrance connection 231 of a connector unit 230. The connector unit 230 described in more detailed hereinafter serves for the connection of a test nipple 250 to be installed in a hole 24 of a floor 20. It should be noted that the connections 211, 221, 228, and 231 are preferably provided with shut-off cocks, but for the sake of simplicity this is not shown in figure 3.

In the application example shown the floor 20 installed on the ground 10 is a modular floor with tiles 21, 21'. Between the adjacent tiles 21, 21' there is a small space or joint 22 in which, near the top surface of the tiles, a seal 23 has been made, for example a plastic adhesive. In the tile 21 a vertical hole 24 has been drilled with a suitable diameter, for example approximately 12 cm. In the hole 24 a test nipple 250 has been placed. In a simple embodiment the test nipple 250 has a disc-shaped configuration that is fixed in place securely with its exterior circumference sealed off in the hole 24. Near the centre the test nipple 250 is provided with a normally closed connection unit 251, preferably a quick coupling. In view of the fact that the construction of a quick coupling as this is normally known is not a subject of the present invention, this will not be further discussed here.

Possible embodiments of the test nipple 250 will be discussed in more detail later. Here it will suffice to comment that the test nipple 250 is installed in the hole 24 in such a manner that it can be removed.

The preferred embodiment of the connector unit 230 shown here comprises a (vertically oriented during operation) tube 232, preferably of metal, with a sufficient interior diameter, preferably 15 mm or more. At its bottom end the tube 232 has a connecting unit 233 that fits in the quick coupling 251. The interior of the tube 232 communicates with the specified entrance connection 231, in which between the entrance connection 231 and the tube 232 there is an adjustable pressure regulating valve 234. By means of a manometer 235 or suchlike, the pressure in the tube 232 can be read.

Preferably, and as illustrated, the connector unit is outfitted with a controllable valve 237 that is controlled by an adjustable pressure sensor 236. The pressure sensor 236 is outfitted for measuring the pressure currently present in the tube 232, and for comparing the measured pressure with a preset threshold value. The valve 237 has two positions: completely closed or completely open; normally the valve 237 is closed. As soon as the measured pressure exceeds the preset threshold value, the pressure sensor 236 sends a control signal to the valve 237 to switch the valve 237 to the completely open position, so that the interior of the tube 232 is placed, via a permanently open exit 238, in open connection with the environment.

Below the function of the mobile air testing system 200 according to the present invention will be explained, based on a situation in which no impermeability testing facilities have as yet been installed in a floor 20 to be tested.

First of all an operator will drill a hole 24 in the floor 20, more particularly in the tile 21, which hole, in contrast to what is usual in the known vertical system, will not be continued in a drill hole in the ground 10. Then the test nipple 250 will be clamped in place in that hole.

So it is not necessary to drill deeper than the thickness of the tile 21, and the ground 10 can remain unaffected. Here one already sees a significant advantage of the present invention: because there is no drilling in the ground 10, there is no risk that lines or cables will be damaged, so that the tile 21 in which the hole 24 is drilled can be any tile at all. This means that no preparatory work is necessary in order to investigate where under the floor 20 lines and cables are located, because the ground 10 remains basically intact. In a situation where it is desirable to carry out an inspection, one can relatively rapidly proceed to the execution of the inspection, because the preparatory work is limited to the drilling of a hole in a tile 21 and the placement of the test nipple 250, which requires very little time.

Then the connector unit 230 is connected via the connections 233 and 251 to the test nipple 250, the connector unit 230 is connected via the hose 229 to the filter unit 220, and the filter unit 220 is connected via the hose 212 to the compressor 210. Then the compressor 210 is switched on, the air is blown directly under the test nipple 250 in the tile 21. Thus the pressure in the portion of the hole 24 under the test nipple 250 increases, such that the test nipple 250 and thus the tile 21 is lifted up a bit in relation to the adjacent tiles 21', as exaggeratedly illustrated in figure 3. Thus a crack-like connection is created along the border area between ground 10 and tile 21 between the hole 24 and the joints 22. The air blown in can now rapidly enter the area under the floor 20 to be inspected, or at least it can rapidly diffuse in the joints 22. Thus the adjacent tiles 21', as well, can be lifted a bit, so that a crack-like area forms along the border area 11 between the floor 20 and the ground 10. This demonstrates another important advantage of the present invention, namely that the air pressure does not need to continue through the ground 10 (as is usually the case in the known horizontal and vertical systems), but can continue very rapidly, practically without resistance, along the border area 11 between the ground 10 and the floor 20 and in the portions of the joints 22 located under the seal 23. Even if the ground 10 offers a great flow resistance to air, the working method according to the present invention can be used, with an advantage being that test results are available very rapidly.

It should be remarked that, if the floor is not composed of elements (tiles) but instead is constructed as a single unit, for example a poured concrete floor, in that case, as well, the air can move virtually unobstructed along the border area 11.

Once the inspection of the floor has been completed, one disconnects the connector unit 230 from the test nipple 250, disconnects the test nipple 250 from the tile 21, and removes the test nipple 250 from the tile 21. Then one closes the hole 24 in the tile 21 by placing a sealing guard 240. This demonstrates an important advantage of the present invention, namely that (apart from the guard 240) no dedicated parts remain behind in the floor 20 and/or the ground 10; the entire system can be utilised in several places, so it is particularly profitable to operate.

Figure 3 illustrates a simple variant embodiment 430 of the "mobile system", which is meant for use in floors 20 with joints 22 that are sealed with a plastic sealing material such as adhesive 23, as discussed with reference to figure 5A, where no holes 24 have yet been made in the floor 20. In this simple variant embodiment 430 it is not necessary to make holes 24 in the floor 20. In this simple variant embodiment 430 a passage unit is made in the form of a hollow needle or tube 431 of which the end is preferably somewhat pointed.

In this simple variant embodiment 430 no preparatory work is needed. Should one wish to carry out test measurements, one would force a hole in the seal 23, preferably with the aid of the hollow tube 431 itself, after which one would immediately commence to blow air into the joint 22 under the seal 23 through the hollow tube 431. The air blown in can move in the system of joints 22 and along the border layer 11, as already discussed above.

After completing the test measurements, one pulls the tube 431 back out of the seal 23. Depending on the material used for the seal 23 (the seal 23 can be self-sealing), one closes the remaining hole in the seal 23 with a piece of sealing material, for example a suitable adhesive that is also used to repair possible leaks in the joint seals.

It will be clear to an expert that the scope of the present invention is not limited to the examples described above, but rather that various amendments and modifications are possible without deviating from the scope of the invention as defined in the claims appended hereto.

In the above the floor 20 is described as a tile floor; it is clear, however, that the present invention can also be applied to floors that are made in a single unit, for example poured concrete floors or asphalt floors.

In addition, it should be remarked that the present invention can also be applied to the testing of floors of which it is indeed desirable that they be porous, in order to determine whether such floors are indeed sufficiently permeable and have not become clogged.

It is always an important advantage of the present invention that the air blown in can always move horizontally directly under the floor surface to be investigated, instead of, as is the case in currently standard technique, the air having to move vertically through the ground. Because of the advantages of the present invention an especially small minimal amount of pressure loss takes place between the pressure regulating valve 234 and the space under the floor 20, the compressor can be replaced by a blower, resulting in savings on equipment costs.

## Claims

1. Working method for testing the impermeability respectively permeability of a floor (20), of a hard material, such as for example asphalt, stone or concrete or the like, which floor (20) rests on a ground (10) of for example sand or a sand/cement mixture or the like, in which one pumps air from above through the floor (20) or from a side of the floor between the floor and the ground, to a space directly under the relevant floor and above the ground (10) under the floor (20), and one determines, for example by observing soap bubbles forming on the top of the floor, whether or not air is penetrating through the floor, **characterised in that** the air is pumped directly to said space directly under the relevant floor (20).

2. Working method according to claim 1, in which one makes an opening in the floor (20) or makes use of an already existing opening in the floor, places a test nipple (250; 300; 431) in that opening, and pumps air under the floor via that test nipple.

3. Working method according to claim 2, in which the opening is made by the drilling of a hole (24) in a floor plate or tile (21), and in which a test nipple (250; 300) is used that is made for fitting in a sealing manner in the hole (24).

4. Working method according to claim 3, in which the test nipple (250; 300) is removed after use from the specified hole (24), and can then be used for the measurement at another hole (24) at another location.

5. Working method according to claim 2, in which the opening is made by punching an opening in a joint seal (23), and in which a passage unit (431) is used of which at least the end has the form of a hollow needle or tube.

## Patentansprüche

1. Arbeitsverfahren für die Prüfung der Dichtigkeit beziehungsweise Durchlässigkeit eines Belags (20) aus einem harten Material wie zum Beispiel Asphalt, Stein oder Beton oder Ähnlichem, wobei der Belag (20) auf einem Untergrund (10) ruht, der zum Beispiel aus Sand oder einer Mischung aus Sand und Zement oder Ähnlichem besteht, und wobei man von oben her durch den Belag (20) oder von einer Seite des Belags her Luft zwischen den Belag und den Untergrund in einen Raum pumpt, der sich unmittelbar unter dem betreffenden Belag und über dem Untergrund (10) unter diesem Belag (20) befindet, und man, zum Beispiel durch Beobachtung von an der Oberseite des Belags sich bildenden Seifenblasen, prüft, ob Luft durch den Boden dringt, **dadurch gekennzeichnet, dass** die Luft direkt in den genannten Raum unmittelbar unter dem betreffenden Belag (20) gepumpt wird.

2. Arbeitsverfahren nach Anspruch 1, wobei man in dem Belag (20) eine Öffnung herstellt oder eine in diesem Belag bereits vorhandene Öffnung nutzt, in dieser Öffnung einen Prüfnippel (250; 300; 431) anbringt und durch diesen Prüfnippel Luft unter diesen Belag pumpt.

3. Arbeitsverfahren nach Anspruch 2, wobei die Öffnung **dadurch** hergestellt wird, dass man ein Loch (24) in eine Bodenplatte oder Fliese (21) bohrt, und wobei ein Prüfnippel (250; 300) verwendet wird, der so ausgeführt ist, dass er spaltfrei in das Loch (24) passt.

4. Arbeitsverfahren nach Anspruch 3, wobei der Prüfnippel (250; 300) nach Gebrauch aus dem genannten Loch (24) entfernt wird und anschließend für die Messung an einem anderen Loch (24) an einem anderen Ort verwendet werden kann.

5. Arbeitsverfahren nach Anspruch 2, wobei die Öffnung **dadurch** hergestellt wird, dass ein Loch in eine Fugendichtung (23) gestochen wird, und wobei ein Durchführungsorgan (431) verwendet wird, das zumindest an seiner Spitze die Form einer hohlen Nadel oder Röhre hat.

## Revendications

1. Méthode de travail pour l'étude, respectivement, de l'étanchéité et de la perméabilité d'un sol (20) constitué d'un matériau solide, comme c'est le cas de l'asphalte, de la pierre, du béton et autres matériaux similaires, lequel sol (20) repose sur un terrain (10) constitué, par exemple, de sable ou d'un mélange de sable/ciment ou similaire, dans le cadre de laquelle méthode l'on insuffle de l'air - depuis le dessus du sol (20) et à travers lui ou depuis la partie latérale du sol, entre le sol et le terrain - en direction d'un espace situé directement sous le sol en question et au-dessus du terrain (10) sous le sol en question (20) et l'on recherche - par exemple, en observant les bulles de savon qui se forment sur la partie supérieure du sol - si de l'air pénètre dans le sol, méthode **caractérisée en ce que** l'air est insufflé directement vers l'espace mentionné, directement sous le sol (20) en question.

2. Méthode de travail selon revendication 1, par quoi l'on pratique une ouverture dans le sol (20) ou l'on fait usage d'une ouverture déjà existante dans le sol, dans laquelle on place une douille de test (250; 300; 431) par le biais de laquelle douille de test est insufflé de l'air sous le sol en question.

3. Méthode de travail selon revendication 2, par quoi l'ouverture est pratiquée par forage d'un trou (24) dans la plaque de sol ou le carrelage (21), et par quoi est utilisée une douille de test (250; 300) mise en place de telle sorte qu'elle s'adapte de manière étanche dans le trou pratiqué (24).

4. Méthode de travail selon revendication 3, par quoi la douille de test (250; 300), après usage, est enlevée du trou mentionné (24), et peut ensuite être utilisée pour le mesurage dans un autre trou (24), à un autre endroit.

5. Méthode de travail selon revendication 2, par quoi l'ouverture est réalisée en piquant une ouverture dans une étanchéité de joint (23), un organe de traversée (431) étant utilisé, dont l'extrémité a, en tout cas, la forme d'une aiguille creuse ou d'un tuyau.
